# EUROPEAN PATENT APPLICATION

(11) **EP 4 507 034 A1**
(43) Date of publication of application: **12.02.2025**
(21) Application number: 23780899.3
(22) Date of filing: 30.03.2023
(51) Int. Cl.: H01M 4/525, H01M 4/36, H01M 4/505

(54) **POSITIVE ELECTRODE ACTIVE MATERIAL FOR LITHIUM ION SECONDARY BATTERY, AND METHOD FOR MANUFACTURING POSITIVE ELECTRODE ACTIVE MATERIAL FOR LITHIUM ION SECONDARY BATTERY**

(30) Priority: 01.04.2022 JP 2022061916
(71) Applicant: SUMITOMO METAL MINING CO., LTD., Tokyo 105-8716 (JP)
(72) Inventor: KANEDA, Haruki, Niihama-shi, Ehime 792-0002 (JP); KOSHIKA, Yuki, Niihama-shi, Ehime 792-0002 (JP); NAKAMURA, Takuma, Niihama-shi, Ehime 792-0002 (JP); SUESHIGE, Yoshitaka, Niihama-shi, Ehime 792-0002 (JP); KOYAMA, Yuki, Niihama-shi, Ehime 792-0002 (JP); KAWAZOE, Takuya, Niihama-shi, Ehime 792-0002 (JP)
(74) Representative: Jones, Nicholas Andrew
(86) International application number: PCT/JP2023/013221
(87) International publication number: WO 2023/190891

(57) **Abstract**

A positive electrode active material for a lithium-ion secondary battery includes lithium metal complex oxide particles, and one or more additive particles selected from among aluminum oxide particles, titanium oxide particles, magnesium oxide particles, silicon oxide particles, and zirconium oxide particles. A specific surface area of the positive electrode active material is 0.25 m²/g or more and 4.0 m²/g or less.

## Description

### TECHNICAL FIELD

The present invention relates to a positive electrode active material for a lithium-ion secondary battery, and a production method of a positive electrode active material for a lithium-ion secondary battery.

### BACKGROUND ART

In recent years, with the growing popularity of portable electronic devices, such as mobile phones, laptop computers, and the like, it is strongly desired to develop small and lightweight secondary batteries having high energy density and durability. Also, it is strongly desired to develop high-output secondary batteries as batteries for electric vehicles, such as power tools, hybrid vehicles, and the like. Further, in addition to the required characteristics described above, there has been a growing demand for a highly durable secondary battery that is not appreciably degraded even after repeated use.

A lithium-ion secondary battery is one type of secondary battery that satisfies such a requirement. The lithium-ion secondary battery is formed of a negative electrode, a positive electrode, an electrolyte, and the like, and active materials used in the negative electrode and the positive electrode are materials that enable intercalation and deintercalation of lithium. The lithium-ion secondary battery has high energy density, output characteristics, and durability, as described above.

Research and development of the lithium-ion secondary battery are actively being conducted at present. Among others, a lithium-ion secondary battery using a layered or spinel-type lithium-metal complex oxide as a positive electrode material can achieve a voltage as high as approximately 4 V, and thus is increasingly being put into practice as a battery with high energy density.

As a positive electrode material of such a lithium-ion secondary battery, lithium metal complex oxides are proposed at present. Examples of the lithium metal complex oxides include: a lithium cobalt complex oxide (LiCoO₂) that is relatively readily synthesized; a lithium nickel complex oxide (LiNiO₂) and a lithium nickel cobalt manganese complex oxide (LiNi_{1/3}Co_{1/3}Mn_{1/3}O₂) each using nickel that is more inexpensive than cobalt; and a lithium manganese complex oxide (LiMn₂O₄) and a lithium nickel manganese complex oxide (LiNi_{0.5}Mn_{0.5}O₂) each using manganese.

In recent years, further improvement in battery characteristics is required for lithium-ion secondary batteries. Therefore, there has been a demand for a positive electrode active material for a lithium-ion secondary battery capable of enhancing battery characteristics when used in the lithium-ion secondary battery, and various studies have been conducted.

For example, Patent Document 1 proposes coated particles for a lithium-ion secondary battery. The coated particles include positive electrode active material particles and a metal sulfide complexed to the surfaces of the positive electrode active material particles. The total mass of the metal sulfide is from 1.0% by mass through 5.0% by mass relative to the total mass of the positive electrode active material particles. The metal sulfide has a layered structure.

### RELATED ART DOCUMENTS

### PATENT DOCUMENTS

Patent Document 1: Japanese Unexamined Patent Application Publication No. 2016-100101

### SUMMARY OF THE INVENTION

### PROBLEMS TO BE SOLVED BY THE INVENTION

In recent years, there has been a need for a positive electrode active material for a lithium-ion secondary battery capable of enhancing cycle characteristics when used in the lithium-ion secondary battery.

In view of the above issues of the related art, in one aspect of the present invention, it is an object to provide a positive electrode active material for a lithium-ion secondary battery capable of enhancing cycle characteristics when used in the lithium-ion secondary battery.

### MEANS FOR SOLVING THE PROBLEMS

In order to address the above issues, the present invention provides, in one aspect, a positive electrode active material for a lithium-ion secondary battery that includes lithium metal complex oxide particles, and one or more additive particles selected from among aluminum oxide particles, titanium oxide particles, magnesium oxide particles, silicon oxide particles, and zirconium oxide particles. A specific surface area of the positive electrode active material is 0.25 m²/g or more and 4.0 m²/g or less.

### ADVANTAGEOUS EFFECTS OF THE INVENTION

According to one aspect of the present invention, it is possible to provide a positive electrode active material for a lithium-ion secondary battery capable of enhancing cycle characteristics when used in the lithium-ion secondary battery.

### BRIEF DESCRIPTION OF THE DRAWINGS

[FIG. 1] FIG. 1 is an explanatory diagram of a structure of a laminate-type battery produced in experimental examples.
[FIG. 2A] FIG. 2A is a SEM image of a positive electrode active material obtained in Experimental Example 4.
[FIG. 2B] FIG. 2B is a SEM image of a positive electrode active material obtained in Experimental Example 8.
[FIG. 3A] FIG. 3A is a SEM image of a positive electrode active material obtained in Experimental Example 13.
[FIG. 3B] FIG. 3B is a SEM image of a positive electrode active material obtained in Experimental Example 16.
[FIG. 4] FIG. 4 is a SEM image of a positive electrode active material obtained in Experimental Example 22.
[FIG. 5] FIG. 5 is a SEM image of a positive electrode active material obtained in Experimental Example 25.
[FIG. 6A] FIG. 6A is a SEM image of a positive electrode active material obtained in Experimental Example 26.
[FIG. 6B] FIG. 6B is a partially enlarged view of FIG. 6A.
[FIG. 7] FIG. 7 is a cross-sectional SEM image of a positive electrode active material obtained in Experimental Example 28.
[FIG. 8] FIG. 8 is a cross-sectional SEM image of a positive electrode active material obtained in Experimental Example 30.
[FIG. 9A] FIG. 9A is a SEM image of a positive electrode active material obtained in Experimental Example 32.
[FIG. 9B] FIG. 9B is a partially enlarged view of FIG. 9A.
[FIG. 9C] FIG. 9C is a SEM image of a positive electrode active material obtained in Experimental Example 34.
[FIG. 9D] FIG. 9D is a partially enlarged view of FIG. 9C.

### DETAILED DESCRIPTION OF THE INVENTION

Hereinafter, embodiments of the present invention will be described with reference to the drawings. However, the present invention is not limited to the embodiments below, and various modifications and substitutions can be made thereto without departing from the scope of the present invention.

### [Positive Electrode Active Material for Lithium-Ion Secondary Battery]

A positive electrode active material for a lithium-ion secondary battery of the present embodiment (hereinafter also referred to simply as "positive electrode active material") may include lithium metal complex oxide particles, and one or more additive particles selected from among aluminum oxide particles, titanium oxide particles, magnesium oxide particles, silicon oxide particles, and zirconium oxide particles.

A specific surface area of the positive electrode active material of the present embodiment may be 0.25 m²/g or more and 4.0 m²/g or less.

The positive electrode active material of the present embodiment may include the lithium metal complex oxide particles and the additive particles, as described above. Alternatively, the positive electrode active material of the present embodiment may consist of the lithium metal complex oxide particles and the additive particles. However, even in this case, the positive electrode active material including unavoidable impurities is not excluded.

Hereinafter, the lithium metal complex oxide particles and the additive particles included in the positive electrode active material of the present embodiment will be described.

### (Lithium Metal Complex Oxide Particles)

The lithium metal complex oxide particles are particles of a lithium metal complex oxide that contains lithium and a desired metal component.

No particular limitation is imposed on the specific composition of the lithium metal complex oxide. It is suitable to use various lithium metal complex oxides that enable intercalation and deintercalation of lithium ions, i.e., enable absorption and desorption of lithium ions. As the lithium metal complex oxide, for example, it is possible to use one or more types selected from among a lithium metal complex oxide having a spinel-type structure, a lithium metal complex oxide having a layered structure, a lithium metal complex oxide having an olivine-type structure, and the like.

The lithium metal complex oxide having a spinel-type structure can contain, for example, lithium (Li), manganese (Mn), nickel (Ni), and element M1 (M1) at a ratio by mole of Li:Mn:Ni:M1=a1:2-x1-y1:x1:y1. In the above ratio, a1, x1, and y1 preferably satisfy 0.96≤a1≤1.25, 0.40≤x1≤0.60, and 0≤y1≤0.20.

The element M1 may be one or more elements selected from the group consisting of magnesium (Mg), aluminum (Al), silicon (Si), titanium (Ti), chromium (Cr), iron (Fe), cobalt (Co), copper (Cu), and zinc (Zn).

The lithium metal complex oxide having a spinel structure can be represented, for example, by general formula Liₐ₁Mn_{2-x1-y1}Niₓ₁M1_{yl}O_{4+α}. Here, a1, x1, and y1 in the above general formula have been described already, and thus description thereof is omitted here. Preferably, α is, for example, -0.2≤α≤0.2.

The lithium metal complex oxide having a layered structure can contain, for example, lithium (Li), nickel (Ni), cobalt (Co), and element M2 (M2) at a ratio by mole of Li:Ni:Co:M2=a2:1-x2-y2:x2:y2. In the above ratio, a2, x2, and y2 satisfy 0.95≤a2≤1.50, 0≤x2≤0.35, and 0≤y2≤0.35. Also, the element M2 may be one or more elements selected from among magnesium (Mg), calcium (Ca), aluminum (Al), silicon (Si), iron (Fe), chromium (Cr), manganese (Mn), vanadium (V), molybdenum (Mo), tungsten (W), niobium (Nb), titanium (Ti), zirconium (Zr), and tantalum (Ta).

The lithium metal complex oxide having a layered structure can be represented, for example, by general formula Liₐ₂Ni_{1-x2-y2}Coₓ₂M2_{y2}O_{2+β}. Here, a2, x2, and y2 in the above general formula have been described already, and thus description thereof is omitted here. Preferably, β is, for example, 0≤β≤0.10.

The lithium metal complex oxide having an olivine-type structure can contain, for example, lithium (Li), element M3 (M3), phosphorus (P), and oxygen (O), and can be represented by general formula LiM3PO_{4+γ}. The element M3 may be, for example, one or more elements selected from among Co, Ni, Mn, Fe, Mg, Nb, Ti, Al, and Zr, or may be VO. Preferably, γ is, for example,-0.2≤γ≤0.2.

No particular limitation is imposed on the average particle diameter of the lithium metal complex oxide particles. However, the average particle diameter of the lithium metal complex oxide particles is preferably 2 µm or more and 20 µm or less, and more preferably 3 µm or more and 18 µm or less.

When the average particle diameter of the lithium metal complex oxide particles is 20 µm or less, the surface area of the lithium metal complex oxide particles is sufficiently increased. Thus, absorption and release of lithium ions with respect to the electrolyte can be sufficiently promoted.

When the average particle diameter of the lithium metal complex oxide particles is 2 µm or more, handleability can be improved, which is preferable.

The average particle diameter of the lithium metal complex oxide particles can be evaluated in the same manner as in the additive particles described below.

### (Additive Particles)

The inventors of the present invention conducted studies on a positive electrode active material for a lithium-ion secondary battery capable of enhancing cycle characteristics when used in the lithium-ion secondary battery. As a result, they have found that by producing a positive electrode active material including lithium metal complex oxide particles and additive particles, cycle characteristics can be enhanced when the positive electrode active material is used in the lithium-ion secondary battery.

Although the exact reason is not clear, a mechanism by which cycle characteristics can be enhanced is inferred as follows.

By adding additive particles to lithium metal complex oxide particles, the additive particles can be dispersed and arranged on the surfaces of the lithium metal complex oxide particles. As the additive particles, for example, it is possible to use one or more selected from among aluminum oxide particles, titanium oxide particles, magnesium oxide particles, silicon oxide particles, and zirconium oxide particles. These additive particles, i.e., aluminum oxide particles, titanium oxide particles, magnesium oxide particles, silicon oxide particles, and zirconium oxide particles, have corrosion resistance. Therefore, it is believed that by dispersing and arranging the additive particles on the surfaces of the lithium metal complex oxide particles, it is possible to suppress a reaction that degrades the lithium metal complex oxide between the electrolyte and the surfaces of the lithium metal complex oxide particles. That is, it is believed that the additive particles work as artificial SEI (artificial-Solid Electrolyte Interphase) and suppress the above side reaction between the electrolyte and the surfaces of the lithium metal complex oxide particles.

The additive particles are arranged only on the surfaces of the lithium metal complex oxide particles, and thus do not appreciably inhibit migration of lithium ions between the electrolyte and the lithium metal complex oxide particles. Therefore, compared to the case in which no additive particles are added, cycle characteristics can be enhanced while maintaining or enhancing other battery characteristics.

As described above, as the additive particles, it is possible to use one or more selected from among aluminum oxide particles, titanium oxide particles, magnesium oxide particles, silicon oxide particles, and zirconium oxide particles. That is, the additive particles may be aluminum oxide particles, titanium oxide particles, magnesium oxide particles, silicon oxide particles, or zirconium oxide particles, and may be a mixture of two or more particles selected from among aluminum oxide particles, titanium oxide particles, magnesium oxide particles, silicon oxide particles, and zirconium oxide particles.

When titanium oxide particles are used as the additive particles, no particular limitation is imposed on the type of the crystal phase of the contained titanium oxide. Also, the crystal phase thereof may be a mono-phase or a co-phase without any particular limitation. However, from the viewpoint of enhancing, especially, cycle characteristics, the crystal phase of the titanium oxide contained in the titanium oxide particles is preferably, among rutile, anatase, and brookite phases, a mono-phase of the rutile phase or the rutile phase being a main phase. Here, the main phase means a phase having the highest content percentage by mass.

When zirconium oxide particles are used as the additive particles, no particular limitation is imposed on the type of the crystal phase of the contained zirconium oxide. Also, the crystal phase thereof may be a mono-phase or a co-phase without any particular limitation. It is possible to use cubic stabilized zirconium that is formed by adding calcium, magnesium, hafnium, or the like to zirconium oxide. However, from the viewpoint of enhancing, especially, cycle characteristics, the crystal phase of the zirconium oxide contained in the zirconium oxide particles is preferably, among monoclinic, tetragonal, and cubic phases, the tetragonal phase being a main phase. Here, the main phase means a phase having the highest content percentage by mass.

No particular limitation is imposed on the state of the additive particles in the positive electrode active material of the present embodiment. However, preferably, the additive particles are dispersed on the surfaces of the lithium metal complex oxide particles, thereby modifying the surfaces of the lithium metal complex oxide particles.

No particular limitation is imposed on the average particle diameter of the additive particles to be used in the positive electrode active material of the present embodiment. However, for example, the average particle diameter thereof is preferably 300 nm or less, and more preferably 10 nm or more and 200 nm or less.

When the average particle diameter of the additive particles to be used is 300 nm or less, as the additive particles are added to the lithium metal complex oxide particles, the additive particles can be uniformly dispersed on the surfaces of the lithium metal complex oxide particles. In this case, cycle characteristics can be especially enhanced while maintaining battery characteristics without inhibiting the migration of lithium ions between the electrolyte and the lithium metal complex oxide particles. Further, according to the studies conducted by the inventors of the present invention, in terms of positive electrode resistance of SOC50% at a low temperature or a normal temperature after repeated charging and discharging, the lithium-ion secondary battery using the positive electrode active material of the present embodiment can be suppressed compared to a lithium-ion secondary battery using a positive electrode active material to which no additive particles are added. The SOC stands for State of Charge, and can also be referred to as a charge rate.

No particular limitation is imposed on the lower limit of the average particle diameter of the additive particles to be used. However, for example, when the average particle diameter of the additive particles is 10 nm or more as described above, handleability is excellent, which is preferable.

No particular limitation is imposed on the method of determining the average particle diameter of the additive particles. However, the average particle diameter of the additive particles can be observed and measured using a scanning electron microscope (SEM) or a transmission electron microscope (TEM). Specifically, for example, the additive particles are first observed using a SEM or the like, thereby obtaining an image. While no particular limitation is imposed on the magnification for observation, it is preferable to use a magnification of 50,000 or more. No particular limitation is imposed on the upper limit of the magnification. However, from the viewpoint of efficient observation, the upper limit of the magnification is preferably one million times or less, and more preferably 100,000 times or less. From the obtained image, 100 additive particles are randomly selected, and circumscribed circles circumscribing the profiles of the selected particles are drawn, and the diameters of such circumscribed circles are defined as the particle diameters of the particles. The average value of the particle diameters of the 100 evaluated particles can be defined as the average particle diameter of the additive particles.

When 100 additive particles are not included in one field of view, observation is performed in a plurality of fields of view, and a total of 100 particles can be selected from the plurality of fields of view.

No particular limitation is imposed on the specific surface area of the additive particles to be used. However, when the additive particles are aluminum oxide particles, for example, the specific surface area of the aluminum oxide particles is preferably 20 m²/g or more and 180 m²/g or less, and more preferably 65 m²/g or more and 180 m²/g or less. When the specific surface area of the aluminum oxide particles is 20 m²/g or more, sufficiently fine particles can be obtained. Therefore, when the aluminum oxide particles are added to the lithium metal complex oxide particles, the aluminum oxide particles can be dispersed especially uniformly on the surfaces of the lithium metal complex oxide particles. Also, at this time, cycle characteristics can be enhanced while maintaining battery characteristics without inhibiting the migration of lithium ions between the electrolyte and the lithium metal complex oxide particles.

Also, when the specific surface area of the aluminum oxide particles to be used is 180 m²/g or less, handleability is excellent, which is preferable.

When the additive particles are titanium oxide particles, no particular limitation is imposed on the specific surface area of the titanium oxide particles. However, for example, the specific surface area of the titanium oxide particles is preferably 30 m²/g or more and 180 m²/g or less. When the specific surface area of the titanium oxide particles is 30 m²/g or more, sufficiently fine particles can be obtained. Therefore, when the titanium oxide particles are added to the lithium metal complex oxide particles, the titanium oxide particles can be dispersed especially uniformly on the surfaces of the lithium metal complex oxide particles. Also, at this time, cycle characteristics can be enhanced while maintaining battery characteristics without inhibiting the migration of lithium ions between the electrolyte and the lithium metal complex oxide particles.

Also, when the specific surface area of the titanium oxide particles to be used is 180 m²/g or less, handleability is excellent, which is preferable.

When the additive particles are magnesium oxide particles, no particular limitation is imposed on the specific surface area of the magnesium oxide particles. However, for example, the specific surface area of the magnesium oxide particles is preferably 65 m²/g or more and 180 m²/g or less. When the specific surface area of the magnesium oxide particles is 65 m²/g or more, sufficiently fine particles can be obtained. Therefore, when the magnesium oxide particles are added to the lithium metal complex oxide particles, the magnesium oxide particles can be dispersed uniformly on the surfaces of the lithium metal complex oxide particles. Also, at this time, cycle characteristics can be enhanced while maintaining battery characteristics without inhibiting the migration of lithium ions between the electrolyte and the lithium metal complex oxide particles.

Also, when the specific surface area of the magnesium oxide to be used is 180 m²/g or less, handleability is excellent, which is preferable.

When the additive particles are silicon oxide particles, no particular limitation is imposed on the specific surface area of the silicon oxide particles. However, for example, the specific surface area of the silicon oxide particles is preferably 30 m²/g or more and 250 m²/g or less. When the specific surface area of the silicon oxide particles is 30 m²/g or more, sufficiently fine particles can be obtained. Therefore, when the silicon oxide particles are added to the lithium metal complex oxide particles, the silicon oxide particles can be dispersed uniformly on the surfaces of the lithium metal complex oxide particles. Also, at this time, cycle characteristics can be enhanced while maintaining battery characteristics without inhibiting the migration of lithium ions between the electrolyte and the lithium metal complex oxide particles.

Also, when the specific surface area of the silicon oxide particles to be used is 250 m²/g or less, handleability is excellent, which is preferable.

When the additive particles are zirconium oxide particles, no particular limitation is imposed on the specific surface area of the zirconium oxide particles. However, for example, the specific surface area of the zirconium oxide particles is preferably 30 m²/g or more and 250 m²/g or less. When the specific surface area of the zirconium oxide particles is 30 m²/g or more, sufficiently fine particles can be obtained. Therefore, when the zirconium oxide particles are added to the lithium metal complex oxide particles, the zirconium oxide particles can be dispersed especially uniformly on the surfaces of the lithium metal complex oxide particles. Also, at this time, cycle characteristics can be enhanced while maintaining battery characteristics without inhibiting the migration of lithium ions between the electrolyte and the lithium metal complex oxide particles.

Also, when the specific surface area of the zirconium oxide particles to be used is 250 m²/g or less, handleability is excellent, which is preferable.

No particular limitation is imposed on the amount of the additive particles to be added to the lithium metal complex oxide particles. For example, the percentage of the additive particles relative to the lithium metal complex oxide particles is preferably 0.025% by mass or more and 3.0% by mass or less, and more preferably 0.05% by mass or more and 2.0% by mass or less.

When the percentage of the additive particles relative to the lithium metal complex oxide particles is 0.025% by mass or more, a sufficient amount of the additive particles can be arranged on the surfaces of the lithium metal complex oxide particles, and cycle characteristics can be especially enhanced.

The additive particles do not perform intercalation and deintercalation of lithium ions. When an excessive amount of the additive particles is added, battery capacity may be reduced when the resulting material is used in a lithium-ion secondary battery. Therefore, the percentage of the additive particles relative to the lithium metal complex oxide particles is preferably 3.0% by mass or less.

The specific surface area of the positive electrode active material of the present embodiment can be 0.25 m²/g or more and 4.0 m²/g or less, and is preferably 0.29 m²/g or more and 3.8 m²/g or less.

When the specific surface area of the positive electrode active material of the present embodiment is 0.25 m²/g or more, this means that a sufficient amount of the additive particles is arranged on the surfaces of the lithium metal complex oxide particles. Therefore, cycle characteristics can be improved by suppressing a reaction that degrades the lithium metal complex oxide between the electrolyte and the surfaces of the lithium metal complex oxide particles.

Meanwhile, when the specific surface area of the positive electrode active material of the present embodiment is 4.0 m²/g or less, it is possible to prevent an excessive amount of the additive particles from being arranged on the surfaces of the lithium metal complex oxide particles, and to sufficiently increase battery capacity when the resulting material is used in a lithium-ion secondary battery.

The positive electrode active material of the present embodiment preferably has a predetermined specific surface area in accordance with the particle structure of the lithium metal complex oxide to serve as a base material.

For example, when the lithium metal complex oxide to serve as a base material has a porous structure, the specific surface area of the positive electrode active material of the present embodiment is preferably 1.0 m²/g or more and 4.0 m²/g or less, and more preferably 1.2 m²/g or more and 3.8 m²/g or less.

For example, when the lithium metal complex oxide to serve as a base material has a hollow structure, the specific surface area of the positive electrode active material of the present embodiment is preferably 0.50 m²/g or more and 2.5 m²/g or less, and more preferably 0.55 m²/g or more and 2.3 m²/g or less.

When the lithium metal complex oxide to serve as a base material has a solid structure, the specific surface area of the positive electrode active material of the present embodiment is preferably 0.25 m²/g or more and 2.0 m²/g or less, and more preferably 0.29 m²/g or more and 1.8 m²/g or less.

The porous structure means a particle structure in which voids are dispersed over the entirety of the particle. In the case of the porous structure, the average value of void ratio as measured in the cross section of the particle of the lithium metal complex oxide is 15% or more. In the case of the porous structure, no particular limitation is imposed on the upper limit of the average value of the void ratio as measured in the cross section of the particle of the lithium metal complex oxide. However, for example, the upper limit thereof is preferably 85% or less.

The hollow structure means a particle structure including: a hollow part formed of a space arranged at the center of the particle; and an outer shell arranged on an outer side of the hollow part. In the case of the hollow structure, the average value of the void ratio as measured in the cross section of the particle of the lithium metal complex oxide is 15% or more. In the case of the hollow structure, no particular limitation is imposed on the upper limit of the average value of the void ratio as measured in the cross section of the particle of the lithium metal complex oxide. However, for example, the upper limit thereof is preferably 85% or less.

The solid structure means a particle containing substantially no voids in the particle, and the average value of the void ratio as measured in the cross section of the particle is less than 15%.

The average value of the void ratio of the particle cross section of the lithium metal complex oxide can be determined in accordance with the following procedure.

First, a group of particles of the lithium metal complex oxide to be measured are embedded in a resin. Then, the cross sections of the group of the particles are exposed by cutting with a cross section polisher (CP) or the like. The exposed cross sections of the group of the particles are photographed using a scanning electron microscope. Next, the obtained cross-sectional images of the group of the particles are analyzed by image analysis software, thereby identifying voids as black regions and dense parts, such as outer shells and the like, as white regions. Then, for the cross sections of 20 or more particles, the void ratio of each of the particles is calculated in accordance with formula (A) below. (Void ratio (%)) = [Area of black regions/(Area of black regions + Area of white regions) × 100]

As the particles for which the void ratio is calculated, it is desirable to select particles having particle diameters that are substantially equal to the D₅₀ particle diameter, which can be confirmed from the particle size distribution or the like. Here, the particles having particle diameters that are substantially equal to the D₅₀ particle diameter are preferably particles having particle diameters that are within D₅₀ ± 1.0 µm.

By calculating the average of the calculated void ratios of the individual particles, the average value of the void ratio of the lithium metal complex oxide can be determined.

### [Production Method of Positive Electrode Active Material for Lithium-Ion Secondary Battery]

Next, one configuration example of the production method of the positive electrode active material for the lithium-ion secondary battery (hereinafter also referred to simply as "production method of the positive electrode active material") of the present embodiment will be described.

According to the production method of the positive electrode active material of the present embodiment, the above-described positive electrode active material can be produced. Therefore, description of some of the already described matters will be omitted.

The production method of the positive electrode active material for a lithium-ion secondary battery of the present embodiment may include a mixing step of mixing lithium metal complex oxide particles, and one or more additive particles selected from among aluminum oxide particles, titanium oxide particles, magnesium oxide particles, silicon oxide particles, and zirconium oxide particles.

In the mixing step, mixing can be performed such that the specific surface area of the obtained positive electrode active material is 0.25 m²/g or more and 4.0 m²/g or less.

The lithium metal complex oxide particles and the additive particles have already been described for the positive electrode active material for the lithium-ion secondary battery, and thus description thereof is omitted here. As the additive particles, it is preferable to use particles having an average particle diameter of 300 nm or less.

In the mixing step, a typical mixer can be used for mixing the lithium metal complex oxide particles and the additive particles. For example, one or more selected from among a shaker mixer, a Loedige mixer, a Julia mixer, a V blender, and the like can be used. No particular limitation is imposed on mixing conditions in the mixing step. It is preferable to select conditions in which the raw material components are sufficiently mixed without destroying the shapes of the particles and the like of the raw materials, such as the lithium metal complex oxide particles and the like.

No particular limitation is imposed on the mixing ratio of the lithium metal complex oxide particles and the additive particles. For example, as described above, it is preferable to weigh and mix both of the materials such that the percentage of the additive particles relative to the lithium metal complex oxide particles is 0.025% by mass or more and 3.0% by mass or less.

However, in the mixing step, it is preferable to select the lithium metal complex oxide particles and the additive particles, and the mixing ratio thereof such that the specific surface area of the positive electrode active material obtained after the mixing step is 0.25 m²/g or more and 4.0 m²/g or less.

### [Lithium-Ion Secondary Battery]

The lithium-ion secondary battery (hereinafter also referred to as "secondary battery") of the present embodiment may include a positive electrode that includes the above-described positive electrode active material.

Hereinafter, components of one configuration example of the secondary battery of the present embodiment will be described. The secondary battery of the present embodiment includes, for example, a positive electrode, a negative electrode, and a non-aqueous electrolyte, and is formed of components similar to those of a typical lithium-ion secondary battery. The embodiments described below are merely illustrative, and the lithium-ion secondary battery of the present embodiment can be embodied in various modified and improved forms based on knowledge of persons skilled in the art, including the following embodiments. Also, no particular limitation is imposed on applications of the secondary battery.

### (Positive Electrode)

The positive electrode of the secondary battery of the present embodiment may include the above-described positive electrode active material.

One example of a production method of the positive electrode will be described below. First, the above-described positive electrode active material (powder form), a conductive material, and a binding agent (binder) are mixed to form a positive electrode mixture. If necessary, activated carbon or a solvent for viscosity adjustment or the like is added thereto. The resulting mixture is kneaded to form a positive electrode mixture paste.

The mixing ratio of the materials in the positive electrode mixture is a factor that determines the performance of the lithium-ion secondary battery, and can be adjusted in accordance with intended applications. The mixing ratio of the materials may be similar to that of a positive electrode of a publicly known lithium-ion secondary battery. For example, when the total mass of the solid content of the positive electrode mixture excluding the solvent is 100% by mass, the positive electrode active material may be contained in an amount of 60% by mass or more and 95% by mass or less, the conductive material may be contained in an amount of 1% by mass or more and 20% by mass or less, and the binding agent may be contained in an amount of 1% by mass or more and 20% by mass or less.

The obtained positive electrode mixture paste is applied to the surface of a current collector formed of, for example, aluminum foil, and is dried to scatter the solvent, thereby producing a sheet-like positive electrode. If necessary, the positive electrode can be pressed by a roll press or the like in order to increase the electrode density. The sheet-like positive electrode obtained in this manner can be cut to an appropriate size in accordance with an intended battery, and can be used for the production of a battery.

As the conductive material, for example, graphite (natural graphite, artificial graphite, expanded graphite, or the like), a carbon black material, such as acetylene black, Ketjen black (registered trademark), or the like can be used.

The binding agent (binder) plays a role in binding active material particles together. For example, it is possible to use one or more selected from among polyvinylidene fluoride (PVDF), polytetrafluoroethylene (PTFE), fluororubber, ethylene propylene diene rubber, styrene butadiene, a cellulose-based resin, polyacrylic acid, and the like.

If necessary, a solvent that disperses the positive electrode active material, the conductive material, and the like and dissolves the binding agent may be added to the positive electrode mixture. As the solvent, specifically, an organic solvent, such as N-methyl-2-pyrrolidone or the like, can be used. Also, activated carbon may be added to the positive electrode mixture in order to increase capacitance.

The production method of the positive electrode is not limited to the above method described as an example, and may be any other method. For example, the positive electrode may be produced by press-molding the positive electrode mixture and then drying the resulting product in a vacuum atmosphere.

### (Negative Electrode)

The negative electrode for use may be a metal lithium, a lithium alloy, or the like. Also, the negative electrode may be formed in the following manner. Specifically, a binding agent is mixed with a negative electrode active material capable of absorbing and desorbing lithium ions, followed by addition of an appropriate solvent, thereby forming a negative electrode mixture paste. The negative electrode mixture paste is applied to the surface of a metal foil current collector, such as copper or the like, followed by drying. If necessary, the resulting product is compressed in order to increase the electrode density.

As the negative electrode active material, for example, it is possible to use fired organic compounds, such as natural graphite, artificial graphite, a phenol resin, and the like, and powdered carbon materials, such as coke and the like. In this case, a fluorine-containing resin, such as PVDF or the like, can be used as the negative electrode binding agent, as in the positive electrode. As a solvent that disperses the active material and the binding agent, an organic solvent, such as N-methyl-2-pyrrolidone, can be used.

### (Separator)

A separator may be interposed between the positive electrode and the negative electrode, if necessary. The separator is configured to separate the positive electrode and the negative electrode from each other, and retain the electrolyte. A publicly known separator can be used as the above separator. For example, it is possible to use a thin membrane formed of polyethylene, polypropylene, or the like and having many fine pores.

### (Non-Aqueous Electrolyte)

As the non-aqueous electrolyte, for example, a non-aqueous electrolytic solution can be used.

As the non-aqueous electrolytic solution, for example, it is possible to use a solution prepared by dissolving a lithium salt, serving as a supporting salt, in an organic solvent. Also, the non-aqueous electrolytic solution for use may be a solution prepared by dissolving a lithium salt in an ionic liquid. The ionic liquid refers to a salt that is formed of a cation other than a lithium ion and an anion and is in a liquid state even at normal temperature.

Examples of the organic solvent include, for example: cyclic carbonates, such as ethylene carbonate, propylene carbonate, butylene carbonate, trifluoropropylene carbonate, and the like; chain carbonates, such as diethyl carbonate, dimethyl carbonate, ethyl methyl carbonate, dipropyl carbonate, and the like; ether compounds, such as tetrahydrofuran, 2-methyltetrahydrofuran, dimethoxyethane, and the like; sulfur compounds, such as ethyl methyl sulfone, butane sulfone, and the like; and phosphorus compounds, such as triethyl phosphate, trioctyl phosphate, and the like. These may be used alone or in combination as a mixture.

As the supporting salt, it is possible to use LiPF₆, LiBF₄, LiClO₄, LiAsF₆, LiN(CF₃SO₂)₂, composite salts thereof, and the like. Further, the non-aqueous electrolytic solution may contain a radical scavenger, a surfactant, a flame retardant, and the like.

Also, as the non-aqueous electrolyte, a solid electrolyte may be used. The solid electrolyte has a property to withstand a high voltage. Examples of the solid electrolyte include inorganic solid electrolytes and organic solid electrolytes.

Examples of the inorganic solid electrolyte include oxide-based solid electrolytes, sulfide-based solid electrolytes, and the like.

No particular limitation is imposed on the oxide-based solid electrolytes. For example, it is preferable to use the oxide-based solid electrolytes that contain oxygen (O) and having lithium-ion conductivity and electron insulation properties. For example, as the oxide-based solid electrolyte, it is possible to use one or more selected from among lithium phosphate (Li₃PO₄), Li₃PO₄Nₓ, LiBO₂N_{X}, LiNbO₃, LiTaO₃, Li₂SiO₃, Li₄SiO₄-Li₃PO₄, Li₄SiO₄-Li₃VO₄, Li₂O-B₂O₃-P₂O₅, Li₂O-SiO₂, Li₂O-B₂O₃-ZnO, Li_{1+X}AlxTi_{2-X}(PO₄)₃ (0≤X≤1), Li_{1+X}Al_{X}Ge_{2-X}(PO₄)₃ (0≤X≤1), LiTi₂ (PO₄)₃, Li_{3X}La_{2/3-X}TiO₃ (0≤X≤2/3). Li₅La₃Ta₂O₁₂, Li₇La₃Zr₂O₁₂, Li₆BaLa₂Ta₂O₁₂, Li_{3.6}Si_{0.6}P_{0.4}O₄, and the like.

No particular limitation is imposed on the sulfide-based solid electrolyte. For example, it is preferable to use the sulfide-based solid electrolyte that contains sulfur (S) and having lithium-ion conductivity and electron insulation properties. As the sulfide-based solid electrolyte, it is possible to use one or more selected from among Li₂S-P₂S₅, Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and the like.

The inorganic solid electrolyte for use may be an inorganic solid electrolyte other than the above-listed ones. Examples thereof include Li₃N, LiI, Li₃N-LiI-LiOH, and the like.

No particular limitation is imposed on the organic solid electrolytes as long as the organic solid electrolytes are a polymer compound exhibiting ionic conductivity. For example, it is possible to use polyethylene oxide, polypropylene oxide, copolymers thereof, and the like. Also, the organic solid electrolyte may contain a supporting salt (lithium salt).

### (Shape and Configuration of Secondary Battery)

The lithium-ion secondary battery of the present embodiment described above can have various shapes, such as a cylindrical shape, a stacked shape, or the like. Regardless of the shape thereof, as long as the secondary battery of the present embodiment uses the non-aqueous electrolytic solution as the non-aqueous electrolyte, a structure that is hermetically closed in a battery casing can be obtained when the positive electrode and the negative electrode are stacked via a separator to form an electrode body, the resulting electrode body is impregnated with the non-aqueous electrolytic solution, and the positive electrode current collector and the positive electrode terminal leading to the exterior are connected to each other using a current collecting lead or the like, and the negative electrode current collector and the negative electrode terminal leading to the exterior are connected to each other using a current collecting lead or the like.

As described above, the secondary battery of the present embodiment is not limited to the form in which the non-aqueous electrolytic solution is used as the non-aqueous electrolyte. The secondary battery may be, for example, a secondary battery using a solid non-aqueous electrolyte, i.e., an all-solid-state battery. In the case of an all-solid-state battery, the configuration other than the positive electrode active material may be changed, if necessary.

The secondary battery of the present embodiment can be used for various applications. The secondary battery of the present embodiment can be a high-capacity, high-output secondary battery. Thus, the secondary battery of the present embodiment is suitable as, for example, a power supply of a small portable electronic device (e.g., a laptop personal computer, a mobile phone terminal, or the like) for which a high capacity is always required. Also, the secondary battery of the present embodiment is suitable as a power supply of an electric vehicle for which a high output is required.

The secondary battery of the present embodiment can be made compact and high-output. Thus, the secondary battery of the present embodiment is suitable as a power supply for an electric vehicle that has limitation in terms of a space available for the power supply. The secondary battery of the present embodiment can be used not only as a power supply for an electric vehicle driven purely by electric energy, but also as a power supply for what is called a hybrid vehicle that also uses a combustion engine, such as a gasoline engine, a diesel engine, or the like.

### EXAMPLES

The present invention will be described below in more detail by way of working examples. However, the present invention is not limited in any way by these working examples.

First, evaluation methods of the positive electrode active materials and the secondary batteries obtained in the following experimental examples will be described.

### (Evaluation of Positive Electrode Active Material)

The positive electrode active material obtained was evaluated in the following manner.

### (a) Average Particle Diameters of Additive Particles and Lithium Metal Complex Oxide Particles

First, using a scanning electron microscope (SEM, scanning electron microscope S-4700, obtained from Hitachi High-Technologies Co., Ltd.), the additive particles contained in the positive electrode active material prepared in the following experimental examples were observed at a magnification of 50,000 or more, thereby obtaining an image. From the obtained image, 100 additive particles were selected, and circumscribed circles circumscribing the profiles of the selected particles were drawn, and the diameters of such circumscribed circles were defined as the particle diameters of the particles. The average value of the particle diameters of the 100 evaluated particles was defined as the average particle diameter of the additive particles contained in the positive electrode active material.

The lithium metal complex oxide particles were measured for the average particle diameter in the same manner.

### (b) Specific Surface Area

The specific surface areas of the positive electrode active material and the additive particles serving as the raw materials were measured by a flow-type gas adsorption specific surface area analyzer (Multisorb, obtained from Yuasa Ionics Co., Ltd.).

### (c) SEM Observation

The positive electrode active materials produced in the following Experimental Examples 4, 8, 13, 16, 22, 25, 26, 32, and 34 were observed using a scanning electron microscope (scanning electron microscope S-4700, obtained from Hitachi High-Technologies Co., Ltd.).

Also, the positive electrode active materials prepared in Experimental Examples 28 and 30 were observed for the cross sections of the particles.

### (Evaluation of Battery Characteristics)

The laminate-type batteries produced in the following experimental examples were evaluated for the positive electrode resistance before and after cycles and for cycle characteristics. The positive electrode resistance was evaluated only for Experimental Examples 1 to 5, 8 to 21, and 24 to 34. Samples for which the positive electrode resistance was not evaluated were subjected to conditioning in the same manner except that the positive electrode resistance was not measured. Subsequently, the cycle characteristics thereof were evaluated.

The laminate-type batteries produced in the following experimental examples were subjected to conditioning in a thermostatic bath maintained at 25°C by performing a cycle five times at a current density of 0.3 mA/cm², the cycle including charging to a cut-off voltage of 4.2 V, stopping for 10 minutes, and discharging to a cut-off voltage of 2.5 V. The initial discharge capacity was defined as the capacity measured when the battery was discharged to 2.5 V in one cycle performed under the same conditions after the above conditioning.

Next, the laminate-type battery was charged to 50% of the initial discharge capacity, stopped for 10 minutes, and discharged at a 1 C rate for 10 seconds. The change in voltage during the discharge at a 1 C rate for 10 seconds was measured.

According to Ohm's law, the change in voltage was divided by the current value to calculate a resistance value (DC-IR). The calculated resistance value was defined as a DC resistance of the battery at a SOC of 50%, at 1 C, for 10 seconds, and at 25°C. The laminate-type batteries produced in the following experimental examples use the same members except for the positive electrode active material. Thus, evaluating the above DC resistance of the battery is regarded as evaluating the resistance of the positive electrode active material.

After the laminate-type battery was cooled to - 10°C, the DC resistance of the battery, i.e., the positive electrode resistance, was measured in the same manner (positive electrode resistance before cycles).

Of the columns of the positive electrode resistance before cycles in Tables 1 and 2, the column of 25°C indicates the positive electrode resistance measured at 25°C, and the column of -10°C indicates the positive electrode resistance measured at -10°C. The positive electrode resistance after cycles, which will be described below, is described in the same manner.

After measuring the positive electrode resistance before cycles or after measuring the initial discharge capacity, the following cycle was performed 500 times in a thermostatic bath maintained at 45°C and at a current density of 2.0 mA/cm²: i.e., charging to a predetermined cut-off voltage, stopping for 10 minutes, and discharging to a cut-off voltage of 2.5 V at a 2 C rate. Then, a capacity maintenance rate, which is a rate of the discharge capacity at the 500^{th} cycle after the conditioning relative to the discharge capacity at the 1^{st} cycle, was calculated and evaluated. When the above-described repeated charging and discharging were performed, charging to a cut-off voltage of 4.3 V was performed for Experimental Examples 1 to 9, 17, 18, 21 to 25, and 28 to 31, and charging to a cut-off voltage of 4.2 V was performed for Experimental Examples 10 to 16, 19, 20, 26, 27, and 32 to 34. Table 1 shows the discharge capacity at the 1^{st} cycle, the discharge capacity at the 500^{th} cycle, and the cycle capacity maintenance rate (capacity maintenance rate).

After the 500 cycles of charging and discharging, the DC resistance of the battery, i.e., a value of the positive electrode resistance, at 25°C and - 10°C was measured and calculated in the same manner as before the 500 cycles of charging and discharging (positive electrode resistance after cycles).

In the following, production conditions and evaluation results of the positive electrode active material and the like in each of the experimental examples will be described. Experimental Examples 1 to 7, 10, 11, 13 to 15, 17 to 26, 28, 30, 32, and 33 are working examples, and Experimental Examples 8, 9, 12, 16, 27, 29, 31, and 34 are comparative examples.

### [Experimental Example 1]

### (1) Production of Positive Electrode Active Material

100 g of particles of a lithium metal complex oxide of LiNi_{0.52}Mn_{0.28}CO_{0.20}O₂ having a layered structure and an average particle diameter of 13.0 µm, and 0.053 g of aluminum oxide particles having an average particle diameter of 54 nm and a specific surface area of 104 m²/g were sufficiently mixed using a shaker mixer, thereby obtaining a positive electrode active material of the present experimental example (mixing step). The shaker mixer used was model: TURBULA TypeT2C obtained from Willy et Bacoffen (WAB). The same shaker mixer was used to perform the mixing step in the other experimental examples below.

The particles of the lithium metal complex oxide used in the present experimental example were observed for structures of cross sections of the particles, and were calculated for an average value of void ratio in the cross sections. Specifically, a group of the particles of the lithium metal complex oxide were embedded in a resin. Then, the cross sections of the group of the particles were exposed by cutting with a cross section polisher (CP). The exposed cross sections of the group of the particles were photographed using a scanning electron microscope. As a result, the particles of the lithium metal complex oxide were confirmed to have a solid structure with substantially no voids.

The obtained cross-sectional images of the group of the particles were analyzed by image analysis and measurement software (WinRoof 6.1.1 obtained from MITANI CORPORATION), thereby identifying voids as black regions and dense parts as white regions, and determining the void ratio of 20 particles.

The 20 particles, for which the void ratio was determined, were particles having particle diameters equal to the D₅₀ particle diameter at a volume cumulative value of 50% in a particle size distribution that was previously determined for the lithium metal complex oxide particles by the laser diffraction and scattering method. The particle diameter of each of the particles was the diameter of the circumscribed circle of the particle in the photographed cross-sectional image. In the other experimental examples below, particles for which the void ratio was determined were selected in the same manner.

The average value of the void ratio of the particles of the lithium metal complex oxide was calculated. As a result, the average value of the void ratio of the particles of the lithium metal complex oxide used in the present experimental example was confirmed to be 5% or less. Similarly, the void ratio of the particles of the lithium metal complex oxide having a solid structure used in Experimental Examples 1 to 27 and 32 to 34 was confirmed to be 5% or less.

The lithium metal complex oxide particles and the aluminum oxide particles contained in the positive electrode active material obtained after the mixing step were measured for average particle diameters by the above-described evaluation method. As a result, the measured average particle diameters were confirmed to be the same as before the mixing. In the other experimental examples below, i.e., Experimental Examples 2 to 34, the average particle diameter of the lithium metal complex oxide particles and the average particle diameter of the additive particles were confirmed to be remain unchanged, i.e., to be the same, before and after the mixing.

The specific surface area of the positive electrode active material obtained after the mixing was measured and confirmed to be 0.29 m²/g.

### (2) Production of Secondary Battery

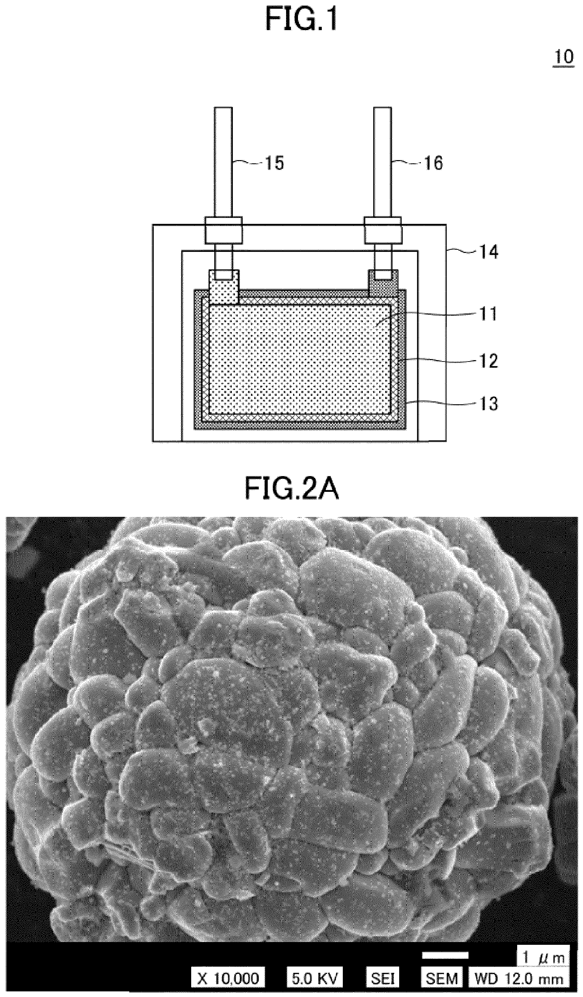

A laminate-type battery having the structure illustrated in FIG. 1 was produced in accordance with the following procedure. The above-described evaluation was performed on the produced battery.

As illustrated in FIG. 1, a laminate-type battery 10 has a structure in which a stack of a positive electrode film 11, a separator 12, and a negative electrode film 13 is impregnated with an electrolytic solution and sealed with a laminate 14. A positive electrode tab 15 is connected to the positive electrode film 11, and a negative electrode tab 16 is connected to the negative electrode film 13. The positive electrode tab 15 and the negative electrode tab 16 are exposed to the exterior of the laminate 14.

A slurry was prepared by dispersing 20.0 g of the obtained positive electrode active material, 2.35 g of acetylene black, and 1.18 g of polyvinylidene fluoride in N-methyl-2-pyrrolidone (NMP). The prepared slurry was applied onto an Al foil such that 7.0 mg of the positive electrode active material would be present on the Al foil per 1 cm². Next, the resulting product, obtained by applying the positive electrode active material-containing slurry onto the Al foil, was dried at 120°C for 30 minutes in the atmosphere, thereby removing NMP. The Al foil, on which the positive electrode active material was applied, was cut into strips having a width of 66 mm, and was roll-pressed at a load of 1.2 t, thereby producing a positive electrode film. The positive electrode film was cut into a rectangle of 50 mm × 30 mm, and dried in a vacuum dryer at 120°C for 12 hours. The resulting film was used as the positive electrode film 11 of the laminate-type battery 10.

Also, the negative electrode film 13 was provided by applying, to a copper foil, a negative electrode mixture paste that was a mixture of graphite powder having an average particle diameter of about 20 µm and polyvinylidene fluoride. A polyethylene porous film having a thickness of 20 µm was used as the separator 12, and a 3:7 liquid mixture of ethylene carbonate (EC) and diethyl carbonate (DEC) (obtained from Ube Industries, Ltd.) containing 1 M LiPF₆ as the supporting electrolyte was used as the electrolytic solution.

In a dry room controlled at a dew point of - 60°C, the above stack of the positive electrode film 11, the separator 12, and the negative electrode film 13 was impregnated with the electrolytic solution, and sealed with the laminate 14, thereby producing the laminate-type battery 10. Then, the above-described evaluation was performed on the produced laminate-type battery 10.

The evaluation results are shown in Table 1.

### [Experimental Examples 2 to 7]

Positive electrode active materials and secondary batteries were produced and evaluated in the same manner as in Experimental Example 1 except that the amount of the aluminum oxide particles added was changed as shown in Table 1. The evaluation results are shown in Table 1.

A SEM image of the positive electrode active material obtained in Experimental Example 4 is shown in FIG. 2A.

### [Experimental Example 8]

The aluminum oxide particles were not added, and particles of a lithium metal complex oxide of LiNi_{0.52}Mn_{0.28}Co_{0.20}O₂ having a layered structure and an average particle diameter of 13.0 µm were used as the positive electrode active material. The particles of the lithium metal complex oxide used had a solid structure. The positive electrode active material was evaluated in the same manner as in Experimental Example 1.

A secondary battery was produced and evaluated in the same manner as in Experimental Example 1 except that the above positive electrode active material was used. The evaluation results are shown in Table 1.

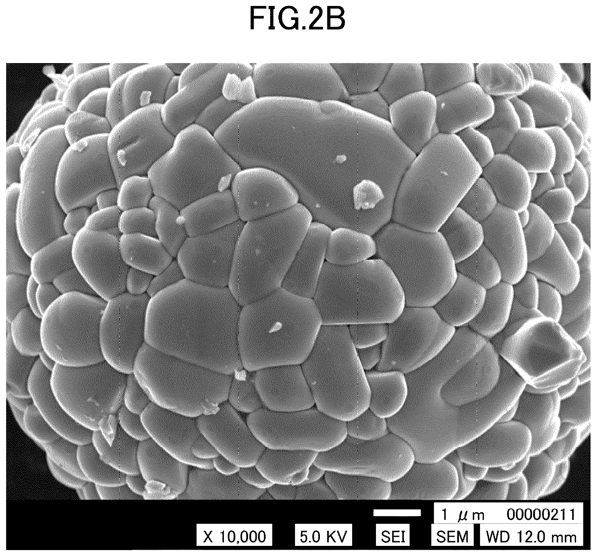

A SEM image of the positive electrode active material obtained in Experimental Example 8 is shown in FIG. 2B.

### [Experimental Example 9]

As the aluminum oxide particles, aluminum oxide particles having an average particle diameter of 3.1 µm and a specific surface area of 0.92 m²/g were used. The aluminum oxide particles had been obtained through milling of aluminum oxide particles having an average particle diameter of 46.2 µm with a jet mill. The amount of the aluminum oxide particles added to 100 g of particles of the lithium metal complex oxide was 0.26 g. A positive electrode active material and a secondary battery were produced and evaluated in the same manner as in Experimental Example 1 except for the above points. The evaluation results are shown in Table 1.

### [Experimental Example 10]

100 g of particles of a lithium metal complex oxide of LiNi_{0.82}Mn_{0.10}Co_{0.05}Al_{0.03}O₂ having a layered structure and an average particle diameter of 13.0 µm, and 0.26 g of aluminum oxide particles having an average particle diameter of 54 nm and a specific surface area of 104 m²/g were sufficiently mixed using a shaker mixer, thereby obtaining a positive electrode active material of the present experimental example (mixing step). The particles of the lithium metal complex oxide used had a solid structure.

Also, the specific surface area of the positive electrode active material obtained after the mixing was measured and confirmed to be 0.51 m²/g.

A secondary battery was produced and evaluated in the same manner as in Experimental Example 1 except that the obtained positive electrode active material was used. The evaluation results are shown in Table 1.

### [Experimental Example 11]

A positive electrode active material and a secondary battery were produced and evaluated in the same manner as in Experimental Example 10 except that the amount of the aluminum oxide particles was changed as shown in Table 1. The evaluation results are shown in Table 1.

### [Experimental Example 12]

Aluminum oxide particles were not added, particles of a lithium metal complex oxide of LiNi_{0.82}Mn_{0.82}Co_{0.05}Al_{0.03}O₂ having a layered structure and an average particle diameter of 13.0 µm were used as the positive electrode active material. This positive electrode active material was evaluated in the same manner as in Experimental Example 10. The particles of the lithium metal complex oxide used had a solid structure.

A secondary battery was produced and evaluated in the same manner as in Experimental Example 10 except that the above positive electrode active material was used. The evaluation results are shown in Table 1.

### [Experimental Example 13]

100 g of particles of a lithium metal complex oxide of LiNi_{0.85}Mn_{0.1}Co_{0.05}O₂ having a layered structure and an average particle diameter of 14.7 µm, and 0.13 g of aluminum oxide particles having an average particle diameter of 54 nm and a specific surface area of 104 m²/g were sufficiently mixed using a shaker mixer, thereby obtaining a positive electrode active material of the present experimental example (mixing step). The particles of the lithium metal complex oxide used had a solid structure.

Also, the specific surface area of the positive electrode active material obtained after the mixing was measured and confirmed to be 1.03 m²/g.

A secondary battery was produced and evaluated in the same manner as in Experimental Example 1 except that the obtained positive electrode active material was used. The evaluation results are shown in Table 1.

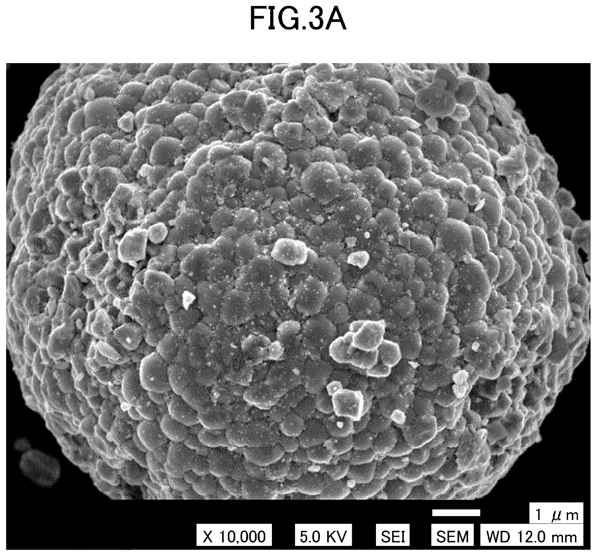

A SEM image of the positive electrode active material obtained in Experimental Example 13 is shown in FIG. 3A.

### [Experimental Examples 14 and 15]

Positive electrode active materials and secondary batteries were produced and evaluated in the same manner as in Experimental Example 13 except that the amount of the aluminum oxide particles added was changed as shown in Table 1. The evaluation results are shown in Table 1.

### [Experimental Example 16]

Aluminum oxide particles were not added, particles of a lithium metal complex oxide of LiNi_{0.85}Mn_{0.}Co_{0.05}O₂ having a layered structure and an average particle diameter of 14.7 µm were used as the positive electrode active material. This positive electrode active material was evaluated in the same manner as in Experimental Example 13. The particles of the lithium metal complex oxide used had a solid structure.

A secondary battery was produced and evaluated in the same manner as in Experimental Example 13 except that the above positive electrode active material was used. The evaluation results are shown in Table 1.

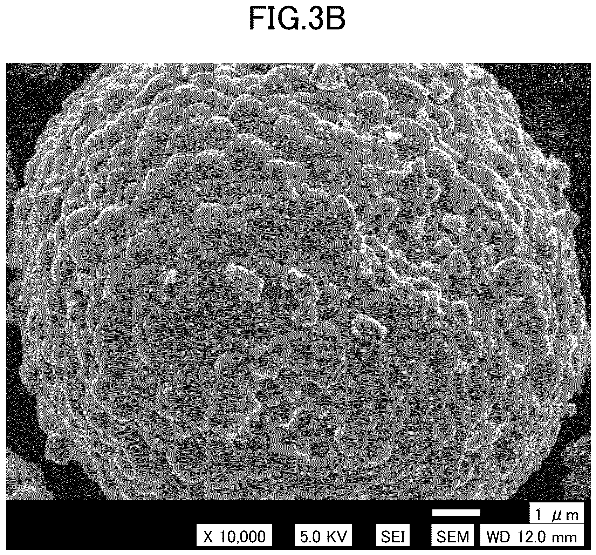

A SEM image of the positive electrode active material of Experimental Example 16 is shown in FIG. 3B.

### [Experimental Example 17]

A positive electrode active material of the present experimental example was obtained in the same manner as in Experimental Example 1 except that the aluminum oxide particles were changed to 0.41 g of titanium oxide particles having an average particle diameter of 84 nm and a specific surface area of 55 m²/g, and the particles of the lithium metal complex oxide and the titanium oxide particles were mixed (mixing step).

The particles of the lithium metal complex oxide used were the same particles as used in Experimental Example 1, i.e., the particles of the lithium metal complex oxide of LiNi_{0.52}Mn_{0.28}Co_{0.20}O₂ having a layered structure and an average particle diameter of 13.0 µm. The particles of the lithium metal complex oxide used had a solid structure.

Also, the crystal phase of the titanium oxide contained in the titanium oxide particles serving as the additive particles was confirmed to be a mono-phase that was a rutile phase.

The lithium metal complex oxide particles and the titanium oxide particles contained in the positive electrode active material obtained after the mixing step were measured for average particle diameters by the above-described evaluation method. As a result, the measured average particle diameters were confirmed to be the same as before the mixing. The same was confirmed in the other experimental examples below as described above in Experimental Example 1.

Also, the specific surface area of the positive electrode active material obtained after the mixing was measured and confirmed to be 0.45 m²/g.

A secondary battery was produced and evaluated in the same manner as in Experimental Example 1 except that the above positive electrode active material was used. The evaluation results are shown in Table 1.

### [Experimental Example 18]

A positive electrode active material and a secondary battery were produced and evaluated in the same manner as in Experimental Example 17 except that the amount of the titanium oxide particles added was changed as shown in Table 1. The evaluation results are shown in Table 1.

### [Experimental Example 19]

A positive electrode active material of the present experimental example was obtained in the same manner as in Experimental Example 13 except that the aluminum oxide particles were changed to 0.20 g of titanium oxide particles having an average particle diameter of 84 nm and a specific surface area of 55 m²/g, and the particles of the lithium metal complex oxide and the titanium oxide particles were mixed (mixing step).

The particles of the lithium metal complex oxide used were the same particles as used in Experimental Example 13, i.e., the particles of the lithium metal complex oxide of LiNi_{0.85}Mn_{0.}Co_{0.05}O₂ having a layered structure and an average particle diameter of 14.7 µm. The particles of the lithium metal complex oxide used had a solid structure.

The crystal phase of the titanium oxide contained in the titanium oxide particles serving as the additive particles was confirmed to be a mono-phase that was a rutile phase.

The specific surface area of the positive electrode active material obtained after the mixing step was measured and confirmed to be 1.11 m²/g.

A secondary battery was produced and evaluated in the same manner as in Experimental Example 13 except that the obtained positive electrode active material was used. The evaluation results are shown in Table 1.

### [Experimental Example 20]

A positive electrode active material of the present experimental example was obtained in the same manner as in Experimental Example 13 except that the aluminum oxide particles were changed to 0.20 g of titanium oxide particles having an average particle diameter of 84 nm and a specific surface area of 55 m²/g, and the particles of the lithium metal complex oxide and the titanium oxide particles were mixed (mixing step).

The particles of the lithium metal complex oxide used were the same particles as used in Experimental Example 13, i.e., the particles of the lithium metal complex oxide of LiNi_{0.85}Mn_{0.}Co_{0.05}O₂ having a layered structure and an average particle diameter of 14.7 µm. The particles of the lithium metal complex oxide used had a solid structure.

The crystal phase of the titanium oxide contained in the titanium oxide particles serving as the additive particles was confirmed to be a co-phase in which a rutile phase and an anatase phase were contained at a 8:2 ratio by mass of the rutile phase:the anatase phase. In this co-phase, the rutile phase is the main phase.

The specific surface area of the positive electrode active material obtained after the mixing step was measured and confirmed to be 1.05 m²/g.

A secondary battery was produced and evaluated in the same manner as in Experimental Example 13 except that the obtained positive electrode active material was used. The evaluation results are shown in Table 1.

### [Experimental Example 21]

As the additive particles, the titanium oxide particles used in Experimental Example 17 were used in addition to aluminum oxide particles. 0.13 g of the aluminum oxide particles and 0.17 g of the titanium oxide particles were used. A positive electrode active material of the present experimental example was obtained in the same manner as in Experimental Example 1 except for the above points, by mixing the particles of the lithium metal complex oxide, the aluminum oxide particles, and the titanium oxide particles (mixing step).

The particles of the lithium metal complex oxide used were the same particles as used in Experimental Example 1, i.e., the particles of the lithium metal complex oxide of LiNi_{0.52}Mn_{0.28}Co_{0.20}O₂ having a layered structure and an average particle diameter of 13.0 µm. The particles of the lithium metal complex oxide used had a solid structure.

The specific surface area of the positive electrode active material obtained after the mixing step was measured and confirmed to be 0.40 m²/g.

A secondary battery was produced and evaluated in the same manner as in Experimental Example 1 except that the obtained positive electrode active material was used. The evaluation results are shown in Table 1.

### [Experimental Example 22]

A positive electrode active material of the present experimental example was obtained in the same manner as in Experimental Example 1 except that the aluminum oxide particles were changed to 0.102 g of magnesium oxide particles having an average particle diameter of 30 nm and a specific surface area of 65 m²/g, and the particles of the lithium metal complex oxide and the magnesium oxide particles were mixed (mixing step).

The particles of the lithium metal complex oxide used were the same particles as used in Experimental Example 1, i.e., the particles of the lithium metal complex oxide of LiNi_{0.52}Mn_{0.28}Co_{0.20}O₂ having a layered structure and an average particle diameter of 13.0 µm. The particles of the lithium metal complex oxide used had a solid structure.

The lithium metal complex oxide particles and the magnesium oxide particles contained in the positive electrode active material obtained after the mixing step were measured for average particle diameters by the evaluation method described in Experimental Example 1. As a result, the measured average particle diameters were confirmed to be the same as before the mixing.

The specific surface area of the positive electrode active material obtained after the mixing was measured and confirmed to be 0.62 m²/g.

A secondary battery was produced and evaluated in the same manner as in Experimental Example 1 except that the above positive electrode active material was used. The evaluation results are shown in Table 2.

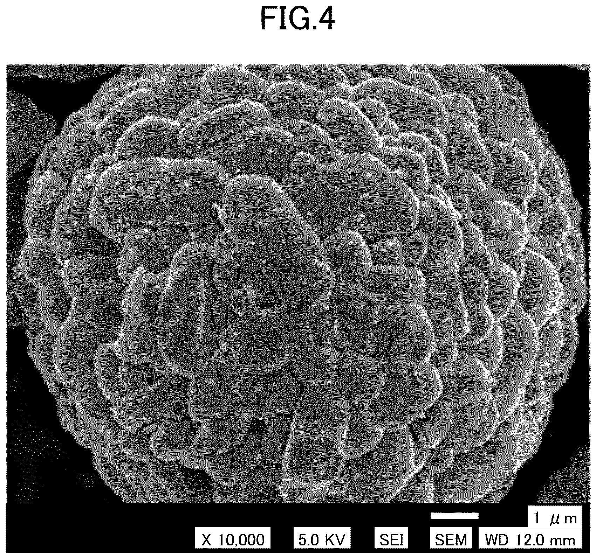

A SEM image of the positive electrode active material obtained in Experimental Example 22 is shown in FIG. 4.

### [Experimental Example 23]

A positive electrode active material and a secondary battery were produced and evaluated in the same manner as in Experimental Example 22 except that the amount of the magnesium oxide particles added was changed as shown in Table 2. The evaluation results are shown in Table 2.

### [Experimental Example 24]

A positive electrode active material of the present experimental example was obtained in the same manner as in Experimental Example 1 except that the aluminum oxide particles were changed to 0.155 g of silicon oxide particles having an average particle diameter of 167 nm and a specific surface area of 207 m²/g, and the particles of the lithium metal complex oxide and the silicon oxide particles were mixed (mixing step).

The particles of the lithium metal complex oxide used were the same particles as used in Experimental Example 1, i.e., the particles of the lithium metal complex oxide of LiNi_{0.52}Mn_{0.28}Co_{0.20}O₂ having a layered structure and an average particle diameter of 13.0 µm. The particles of the lithium metal complex oxide used had a solid structure.

The lithium metal complex oxide particles and the silicon oxide particles contained in the positive electrode active material obtained after the mixing step were measured for average particle diameters by the evaluation method described in Experimental Example 1. As a result, the measured average particle diameters were confirmed to be the same as before the mixing.

The specific surface area of the positive electrode active material obtained after the mixing was measured and confirmed to be 0.38 m²/g.

A secondary battery was produced and evaluated in the same manner as in Experimental Example 1 except that the above positive electrode active material was used. The evaluation results are shown in Table 2.

### [Experimental Example 25]

A positive electrode active material and a secondary battery were produced and evaluated in the same manner as in Experimental Example 24 except that the amount of the silicon oxide particles added was changed as shown in Table 2. The evaluation results are shown in Table 2.

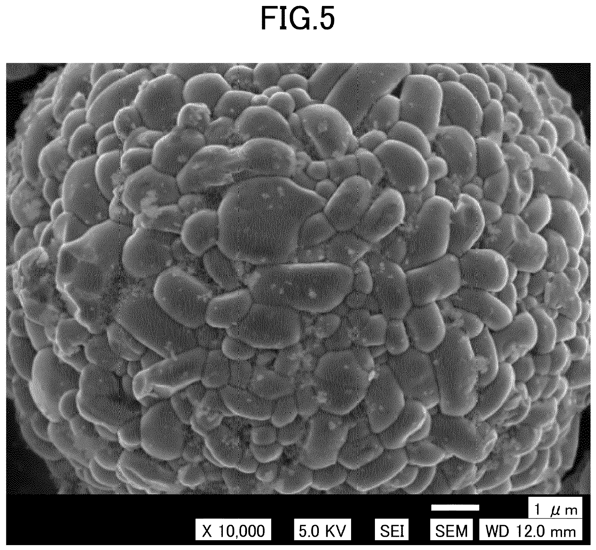

A SEM image of the positive electrode active material obtained in Experimental Example 25 is shown in FIG. 5.

### [Experimental Example 26]

100 g of particles of a lithium metal complex oxide of LiNiO₂ having a layered structure and an average particle diameter of 12.9 µm, and 0.82 g of zirconium oxide particles having an average particle diameter of 10 nm and a specific surface area of 221 m²/g were charged into a vessel purged with nitrogen and sufficiently mixed using a shaker mixer, thereby obtaining a positive electrode active material of the present experimental example (mixing step). The particles of the lithium metal complex oxide used had a solid structure.

Also, the crystal phase of the zirconium oxide contained in the zirconium oxide particles serving as the additive particles was confirmed to be a tetragonal mono-phase.

The specific surface area of the positive electrode active material obtained after the mixing was measured and confirmed to be 1.68 m²/g.

A secondary battery was produced and evaluated in the same manner as in Experimental Example 1 except that the obtained positive electrode active material was used. The evaluation results are shown in Table 2.

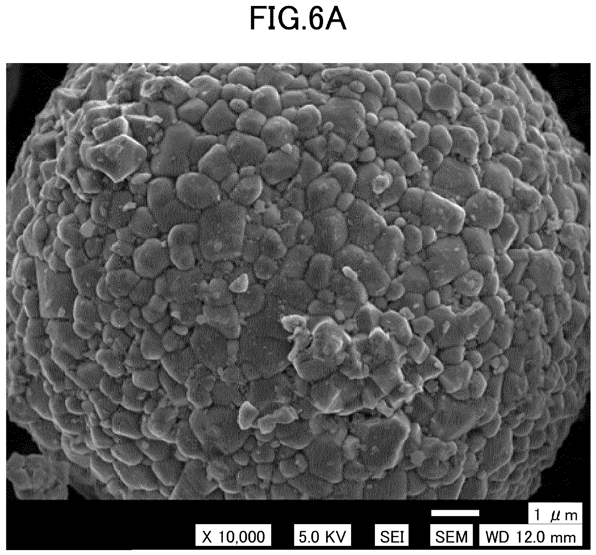

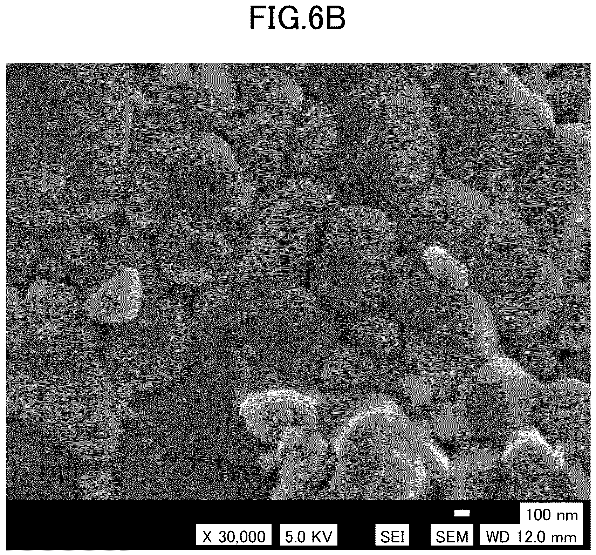

FIGS. 6A and 6B show SEM images of the positive electrode active material obtained in Experimental Example 26. FIG. 6B is a partially enlarged view of FIG. 6A.

### [Experimental Example 27]

Zirconium oxide particles were not added, and the particles of the lithium metal complex oxide of LiNiO₂ having a layered structure and an average particle diameter of 12.9 µm were used as the positive electrode active material. This positive electrode active material was evaluated in the same manner as in Experimental Example 26.

Also, a secondary battery was produced and evaluated in the same manner as in Experimental Example 26 except that the above positive electrode active material was used. The evaluation results are shown in Table 2.

### [Experimental Example 28]

100 g of particles of a lithium metal complex oxide of LiNi_{0.50}Mn_{0.30}Co_{0.20}O₂ having a layered structure and an average particle diameter of 5.2 µm, and 0.32 g of aluminum oxide particles having an average particle diameter of 54 nm and a specific surface area of 104 m²/g were sufficiently mixed using a shaker mixer, thereby obtaining a positive electrode active material of the present experimental example (mixing step).

The particles of the lithium metal complex oxide used in the present experimental example were observed for structures of cross sections of the particles, and were calculated for an average value of void ratio in the cross sections. Specifically, a group of the particles of the lithium metal complex oxide were embedded in a resin. Then, the cross sections of the group of the particles were exposed by cutting with a cross section polisher (CP). The exposed cross sections of the group of the particles were photographed using a scanning electron microscope. As a result, the particles of the lithium metal complex oxide were confirmed to have a hollow structure that was a particle structure including: a hollow part formed of a space arranged at the center of the particle; and an outer shell arranged on an outer side of the hollow part.

From the obtained cross-sectional images of the group of the particles, the average value of the void ratio of the particles of the lithium metal complex oxide was calculated with the method and conditions described in Experimental Example 1. As a result, the average value of the void ratio of the lithium metal complex oxide having a hollow structure used in the present experimental example was confirmed to be 15% or more.

The specific surface area of the positive electrode active material obtained after the mixing was measured and confirmed to be 2.05 m²/g.

A secondary battery was produced and evaluated in the same manner as in Experimental Example 1 except that the obtained positive electrode active material was used. The evaluation results are shown in Table 2.

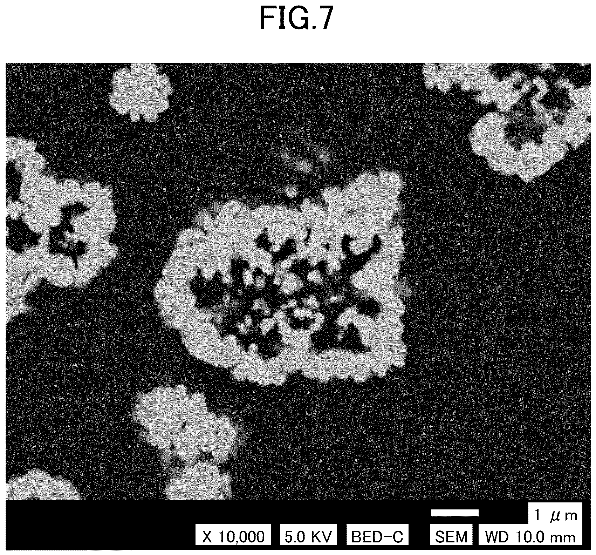

FIG. 7 shows a cross-sectional SEM image of the positive electrode active material obtained in Experimental Example 28.

### [Experimental Example 29]

Aluminum oxide particles were not added, and the particles of the lithium metal complex oxide used in Experimental Example 28, i.e., the particles of the lithium metal complex oxide of LiNi_{0.50}Mn_{0.30}CO_{0.20}O₂ having a hollow structure and a layered structure and having an average particle diameter of 5.2 µm, were used as the positive electrode active material. This positive electrode active material was evaluated in the same manner as in Experimental Example 28.

A secondary battery was produced and evaluated in the same manner as in Experimental Example 1 except that the above positive electrode active material was used. The evaluation results are shown in Table 2.

### [Experimental Example 30]

100 g of particles of a lithium metal complex oxide of LiNi_{0.50}Mn_{0.30}Co_{0.20}O₂ having a layered structure and an average particle diameter of 5.2 µm, and 0.32 g of aluminum oxide particles having an average particle diameter of 54 nm and a specific surface area of 104 m²/g were sufficiently mixed using a shaker mixer, thereby obtaining a positive electrode active material of the present experimental example (mixing step).

The particles of the lithium metal complex oxide used in the present experimental example were observed for structures of cross sections of the particles, and were calculated for an average value of void ratio in the cross sections. Specifically, a group of the particles of the lithium metal complex oxide were embedded in a resin. Then, the cross sections of the group of the particles were exposed by cutting with a cross section polisher (CP). The exposed cross sections of the group of the particles were photographed using a scanning electron microscope. As a result, the particles of the lithium metal complex oxide were confirmed to have a porous structure in which voids were dispersed over the entirety of the particles.

From the obtained cross-sectional images of the group of the particles, the average value of the void ratio of the particles of the lithium metal complex oxide was calculated with the method and conditions described in Experimental Example 1. As a result, the average value of the void ratio of the lithium metal complex oxide having a porous structure used in the present experimental example was confirmed to be 15% or more.

The specific surface area of the positive electrode active material obtained after the mixing was measured and confirmed to be 3.18 m²/g.

A secondary battery was produced and evaluated in the same manner as in Experimental Example 1 except that the obtained positive electrode active material was used. The evaluation results are shown in Table 2.

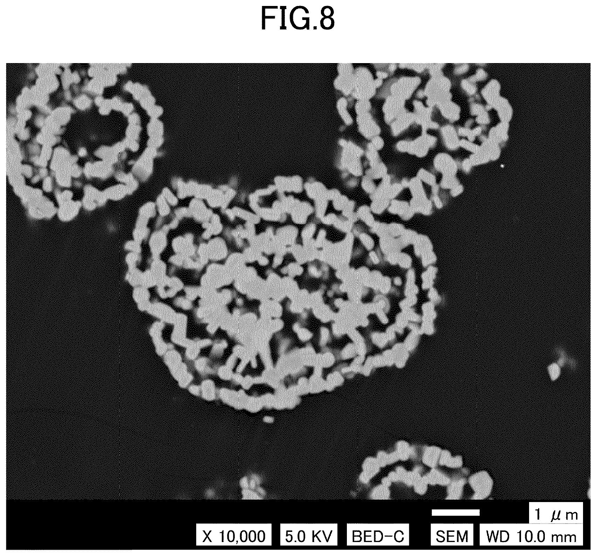

FIG. 8 shows a cross-sectional SEM image of the positive electrode active material obtained in Experimental Example 30.

### [Experimental Example 31]

Aluminum oxide particles were not added, and the particles of the lithium metal complex oxide used in Experimental Example 30, i.e., the particles of the lithium metal complex oxide of LiNi_{0.50}Mn_{0.30}CO_{0.20}O₂ having a porous structure and a layered structure and having an average particle diameter of 5.2 µm, were used as the positive electrode active material. This positive electrode active material was evaluated in the same manner as in Experimental Example 30.

A secondary battery was produced and evaluated in the same manner as in Experimental Example 1 except that the above positive electrode active material was used. The evaluation results are shown in Table 2.

### [Experimental Example 32]

100 g of particles of a lithium metal complex oxide of LiNi_{0.88}Mn_{0.07}CO_{0.05}O₂ having a layered structure and an average particle diameter of 2.3 µm, and 0.26 g of aluminum oxide particles having an average particle diameter of 54 nm and a specific surface area of 104 m²/g were sufficiently mixed using a shaker mixer, thereby obtaining a positive electrode active material of the present experimental example (mixing step). The particles of the lithium metal complex oxide used had a solid structure.

The specific surface area of the positive electrode active material obtained after the mixing was measured and confirmed to be 1.33 m²/g.

A secondary battery was produced and evaluated in the same manner as in Experimental Example 1 except that the obtained positive electrode active material was used. The evaluation results are shown in Table 2.

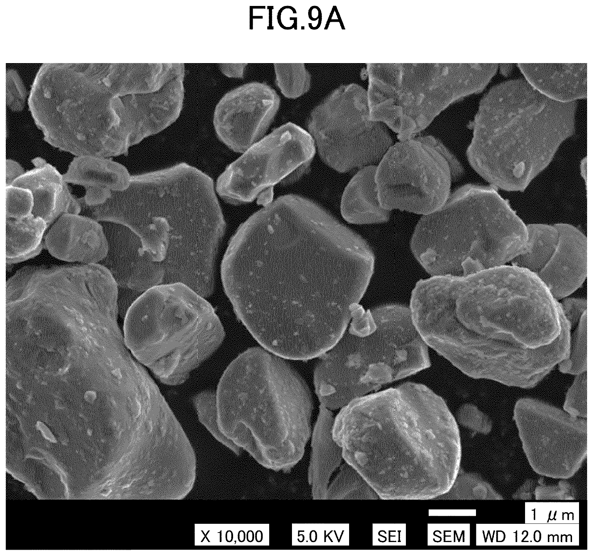

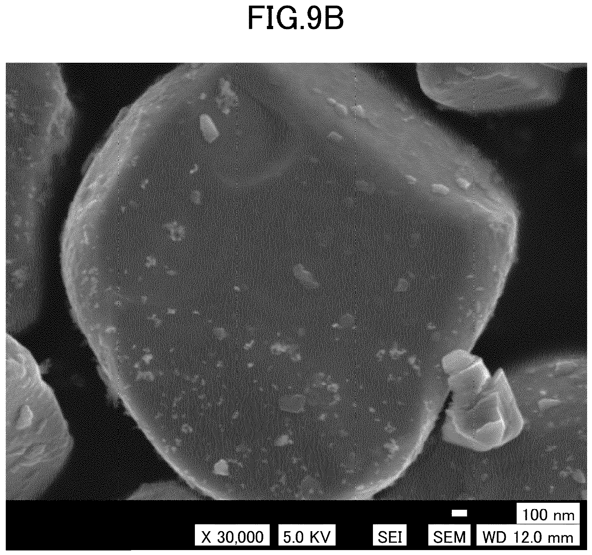

FIGS. 9A and 9B show SEM images of the positive electrode active material obtained in Experimental Example 32. FIG. 9B is a partially enlarged view of FIG. 9A.

### [Experimental Example 33]

A positive electrode active material and a secondary battery were produced and evaluated in the same manner as in Experimental Example 32 except that the amount of the aluminum oxide particles was changed as shown in Table 1. The evaluation results are shown in Table 1.

### [Experimental Example 34]

Aluminum oxide particles were not added, and the particles of the lithium metal complex oxide of LiNi_{0.88}Mn_{0.07}Co_{0.05}O₂ having a layered structure and an average particle diameter of 2.3 µm were used as the positive electrode active material. This positive electrode active material was evaluated in the same manner as in Experimental Example 32.

A secondary battery was produced and evaluated in the same manner as in Experimental Example 32 except that the above positive electrode active material was used. The evaluation results are shown in Table 2.

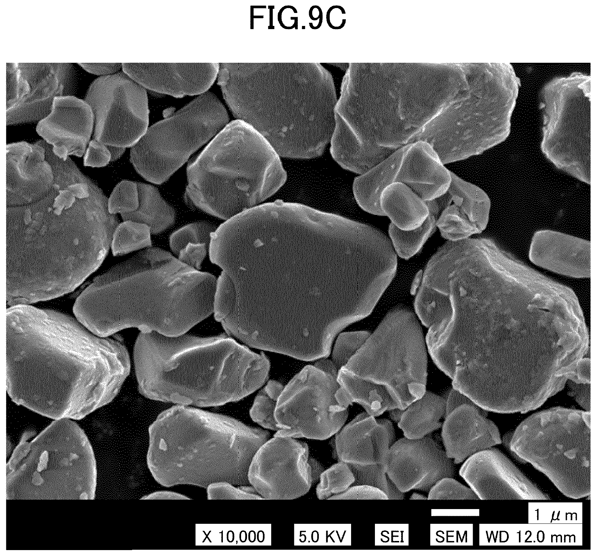

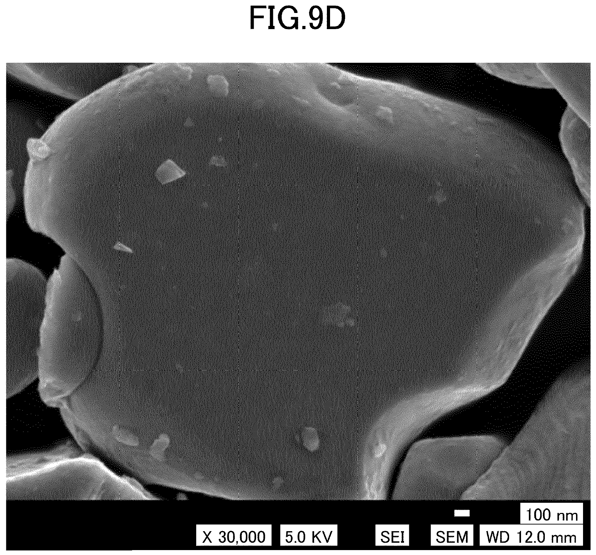

FIGS. 9C and 9D show SEM images of the positive electrode active material obtained in Experimental Example 34. FIG. 9D is a partially enlarged view of FIG. 9C.

**[Table 1-1]**

| | Amount (g) | | | | | | Specific surface area (m²/g) | Positive electrode resistance (Ω) | | | | Discharge capacity at 1^{st} cycle (mAh/g) | Discharge capacity at 500^{th} cycle (mAh/g) | Cycle capacity maintenance rate (%) |
|---|---|---|---|---|---|---|---|---|---|---|---|---|---|---|
| | Lithium metal complex oxide particles | Additive particles | | | | | | Before cycles | | After cycles | | | | |
| | | Aluminum oxide particles | Titanium oxide particles | Magnesium oxide particles | Silicon oxide particles | Zirconium oxide particles | | -10°C | 25°C | -10°C | 25°C | | | |
| Expt. Ex. 1 | 100 | 0.053 | 0 | 0 | 0 | 0 | 0.29 | 7.9 | 1.5 | 20.7 | 3.3 | 170 | 128 | 75.3 |
| Expt. Ex. 2 | 100 | 0.16 | 0 | 0 | 0 | 0 | 0.32 | 7.7 | 1.1 | 16.5 | 2.2 | 170 | 129 | 75.9 |
| Expt. Ex. 3 | 100 | 0.26 | 0 | 0 | 0 | 0 | 0.43 | 8.5 | 1.4 | 15.2 | 2.2 | 169 | 127 | 75.1 |
| Expt. Ex. 4 | 100 | 0.53 | 0 | 0 | 0 | 0 | 0.62 | 9.2 | 1.4 | 17.0 | 2.5 | 168 | 116 | 69.0 |
| Expt. Ex. 5 | 100 | 0.78 | 0 | 0 | 0 | 0 | 0.86 | 8.8 | 1.3 | 17.0 | 2.3 | 167 | 117 | 70.1 |
| Expt. Ex. 6 | 100 | 1.05 | 0 | 0 | 0 | 0 | 1.08 | - | - | - | - | 166 | 116 | 69.9 |
| Expt. Ex. 7 | 100 | 1.56 | 0 | 0 | 0 | 0 | 1.51 | - | - | - | - | 165 | 114 | 69.1 |
| Expt. Ex. 8 | 100 | 0 | 0 | 0 | 0 | 0 | 0.24 | 8.8 | 1.3 | 31.3 | 3.9 | 170 | 113 | 66.5 |
| Expt. Ex. 9 | 100 | 0.26 | 0 | 0 | 0 | 0 | 0.23 | 8.2 | 1.2 | 35.1 | 5.2 | 166 | 103 | 62.0 |

**[Table 1-2]**

| | | | | | | | | | | | | | | |
|---|---|---|---|---|---|---|---|---|---|---|---|---|---|---|
| Expt. Ex. 10 | 100 | 0.26 | 0 | 0 | 0 | 0 | 0.51 | 5.5 | 1.1 | 8.8 | 1.7 | 178 | 145 | 81.5 |
| Expt. Ex. 11 | 100 | 0.53 | 0 | 0 | 0 | 0 | 0.68 | 5.7 | 1.2 | 9.5 | 1.8 | 177 | 138 | 78.0 |
| Expt. Ex. 12 | 100 | 0 | 0 | 0 | 0 | 0 | 0.32 | 6.0 | 1.2 | 14.0 | 2.0 | 178 | 135 | 75.8 |
| Expt. Ex. 13 | 100 | 0.13 | 0 | 0 | 0 | 0 | 1.03 | 5.7 | 0.9 | 9.8 | 6.8 | 170 | 91 | 53.5 |
| Expt. Ex. 14 | 100 | 0.26 | 0 | 0 | 0 | 0 | 1.18 | 5.4 | 0.9 | 9.4 | 5.8 | 169 | 92 | 54.4 |
| Expt. Ex. 15 | 100 | 0.53 | 0 | 0 | 0 | 0 | 1.29 | 5.5 | 0.9 | 8.7 | 4.5 | 167 | 95 | 56.9 |
| Expt. Ex. 16 | 100 | 0 | 0 | 0 | 0 | 0 | 0.97 | 6.1 | 1.0 | 15.3 | 11.7 | 170 | 67 | 39.4 |
| Expt. Ex. 17 | 100 | 0 | 0.41 | 0 | 0 | 0 | 0.45 | 3.7 | 1.3 | 19.4 | 2.8 | 171 | 121 | 70.8 |
| Expt. Ex. 18 | 100 | 0 | 0.82 | 0 | 0 | 0 | 0.66 | 8.8 | 1.4 | 21.3 | 3.1 | 170 | 117 | 68.8 |
| Expt. Ex. 19 | 100 | 0 | 0.20 | 0 | 0 | 0 | 1.11 | 6.0 | 1.0 | 8.8 | 5.4 | 170 | 105.7 | 62.2 |
| Expt. Ex. 20 | 100 | 0 | 0.20 | 0 | 0 | 0 | 1.05 | 6.1 | 1.0 | 10.0 | 5.6 | 170 | 98 | 57.6 |
| Expt. Ex. 21 | 100 | 0.13 | 0.17 | 0 | 0 | 0 | 0.40 | 8.6 | 1.4 | 16.5 | 2.5 | 169 | 123 | 72.8 |

**[Table 2-1]**

| | Amount (g) | | | | | | Specific surface area (m²/g) | Positive electrode resistance (Ω) | | | | Discharge capacity at 1^{st} cycle (mAh/g) | Discharge capacity at 500^{th} cycle (mAh/g) | Cycle capacity maintenance rate (%) |
|---|---|---|---|---|---|---|---|---|---|---|---|---|---|---|
| | Lithium metal complex oxide particles | Additive particles | | | | | | Before cycles | | After cycles | | | | |
| | | Aluminum oxide particles | Titanium oxide particles | Magnesium oxide particles | Silicon oxide particles | Zirconium oxide particles | | -10°C | 25°C | -10°C | 25°C | | | |
| Expt. Ex. 22 | 100 | 0 | 0 | 0.102 | 0 | 0 | 0.62 | - | - | - | - | 171 | 122 | 71.3 |
| Expt. Ex. 23 | 100 | 0 | 0 | 0.205 | 0 | 0 | 0.86 | - | - | - | - | 168 | 115 | 68.5 |
| Expt. Ex. 24 | 100 | 0 | 0 | 0 | 0.155 | 0 | 0.38 | 7.7 | 1.0 | 30.6 | 3.7 | 171 | 117 | 68.4 |
| Expt. Ex. 25 | 100 | 0 | 0 | 0 | 0.311 | 0 | 0.59 | 8.0 | 1.1 | 30.9 | 3.7 | 171 | 115 | 67.3 |
| Expt. Ex. 26 | 100 | 0 | 0 | 0 | 0 | 0.82 | 1.68 | - | 1.3 | - | 8.5 | 181 | 85 | 47.0 |

**[Table 2-2]**

| | | | | | | | | | | | | | | |
|---|---|---|---|---|---|---|---|---|---|---|---|---|---|---|
| Expt. Ex. 27 | 100 | 0 | 0 | 0 | 0 | 0 | 0.24 | - | 1.4 | - | 9.3 | 182 | 80 | 44.0 |
| Expt. Ex. 28 | 100 | 0.32 | 0 | 0 | 0 | 0 | 2.05 | 5.8 | 1.0 | 10.4 | 1.5 | 165 | 148 | 89.7 |
| Expt. Ex. 29 | 100 | 0 | 0 | 0 | 0 | 0 | 1.82 | 6.4 | 1.0 | 25.6 | 2.9 | 168 | 145 | 86.3 |
| Expt. Ex. 30 | 100 | 0.32 | 0 | 0 | 0 | 0 | 3.18 | 4.9 | 1.0 | 11.9 | 1.7 | 170 | 146 | 85.9 |
| Expt. Ex. 31 | 100 | 0 | 0 | 0 | 0 | 0 | 3.02 | 5.7 | 1.0 | 28.5 | 3.7 | 171 | 139 | 81.3 |
| Expt. Ex. 32 | 100 | 0.26 | 0 | 0 | 0 | 0 | 1.33 | 12.4 | 1.2 | 14.8 | 4.4 | 177.1 | 140 | 79.1 |
| Expt. Ex. 33 | 100 | 0.53 | 0 | 0 | 0 | 0 | 1.69 | 12.4 | 1.3 | 14.7 | 4.4 | 176.2 | 138 | 78.3 |
| Expt. Ex. 34 | 100 | 0 | 0 | 0 | 0 | 0 | 1.08 | 13.2 | 1.3 | 31.7 | 5.6 | 176.5 | 131 | 74.2 |

According to the results shown in Tables 1 and 2, Experimental Examples 1 to 7, in which the aluminum oxide particles were added, were confirmed to be higher in cycle characteristics than Experimental Example 8, in which no aluminum oxide particles were added. A similar tendency was confirmed between the other experimental examples, in which the aluminum oxide particles were added, and the experimental examples, in which no aluminum oxide particles were added. Specifically, the similar tendency was confirmed between Experimental Examples 10 and 11 and Experimental Example 12, between Experimental Examples 13 to 15 and Experimental Example 16, between Experimental Example 28 and Experimental Example 29, between Experimental Example 30 and Experimental Example 31, and between Experimental Examples 32 and 33 and Experimental Example 34. Also, a similar tendency was confirmed when the titanium oxide particles, the magnesium oxide particles, the silicon oxide particles, or the zirconium oxide particles were used as the additive particles. Specifically, the similar tendency was confirmed between Experimental Examples 17 and 18, in which the titanium oxide particles were added, and Experimental Example 8, in which no titanium oxide particles were added, and between Experimental Examples 19 and 20, in which the titanium oxide particles were added, and Experimental Example 16, in which no titanium oxide particles were added. Also, the similar tendency was confirmed between Experimental Examples 22 and 23, in which the magnesium oxide particles were added, and Experimental Example 8, in which no magnesium oxide particles were added, and between Experimental Examples 24 and 25, in which the silicon oxide particles were added, and Experimental Example 8, in which no silicon oxide particles were added. The similar tendency was confirmed between Experimental Example 26, in which the zirconium oxide particles were added, and Experimental Example 27, in which no zirconium oxide particles were added.

Further, the similar tendency was confirmed between Experimental Example 21, in which the aluminum oxide particles and the titanium oxide particles were added, and Experimental Example 8, in which no additive particles were added.

Before cycles, the positive electrode resistances of the secondary batteries of Experimental Examples 1 to 5 were equivalent to that of the secondary battery of Experimental Example 8. After the cycles, the positive electrode resistances were suppressed from increasing, and were maintained to be much lower than that of Experimental Example 8. A similar tendency was confirmed between Experimental Examples 10 and 11 and Experimental Example 12, between Experimental Examples 13 to 15 and Experimental Example 16, between Experimental Examples 17, 18, and 21 and Experimental Example 8, between Experimental Examples 19 and 20 and Experimental Example 16, between Experimental Examples 24 and 25 and Experimental Example 8, between Experimental Example 26 and Experimental Example 27, between Experimental Example 28 and Experimental Example 29, between Experimental Example 30 and Experimental Example 31, and between Experimental Examples 32 and 33 and Experimental Example 34.

This is likely because in Experimental Examples 1 to 5, Experimental Example 10, Experimental Example 11, Experimental Examples 13 to 15, Experimental Examples 17 to 21, Experimental Examples 24 to 26, Experimental Example 28, Experimental Example 30, Experimental Example 32, and Experimental Example 33, the additive particles were dispersed on the surfaces of the lithium metal complex oxide particles, thereby suppressing a reaction that degrades the lithium metal complex oxide between the electrolyte and the lithium metal complex oxide particles.

Of Experimental Examples 19 and 20 in which the titanium oxide particles were added, Experimental Example 19 used the titanium oxide particles in which the crystal phase of the titanium oxide contained was the mono-phase of the rutile phase. Meanwhile, Experimental Example 20 used the titanium oxide particles in which the crystal phase of the titanium oxide contained was the co-phase of the rutile phase and the anatase phase, with the rutile phase being the main phase. Comparison between the results of these experimental examples confirmed that the cycle characteristics of Experimental Example 19 was higher. This result confirmed that when titanium oxide particles were used as an additive element, the titanium oxide particles preferably have a rutile phase, and especially preferably the rutile phase was the main phase.

Also, according to the SEM images of Experimental Examples 4 and 8 disclosed in FIGS. 2A and 2B, when Experimental Example 4, in which the aluminum oxide particles were added, was compared to Experimental Example 8, in which no aluminum oxide particles were added, Experimental Example 4 was confirmed to be such that fine aluminum oxide particles were dispersed on the surfaces of the particles of the lithium metal complex oxide, thereby modifying the lithium metal complex oxide particles.

From the SEM images of Experimental Examples 13 and 16 disclosed in FIGS. 3A and 3B, similarly, the positive electrode active material of Experimental Example 13, in which the aluminum oxide particles were added, was confirmed to be such that the additive particles were dispersed on the surfaces of the particles of the lithium metal complex oxide, thereby modifying the lithium metal complex oxide particles. The same was confirmed from the SEM image of Experimental Example 22 disclosed in FIG. 4, the SEM image of Experimental Example 25 disclosed in FIG. 5, the SEM images of Experimental Example 26 disclosed in FIGS. 6A and 6B, and the SEM images of Experimental Example 32 disclosed in FIGS. 9A and 9B. The SEM images of Experimental Examples 22 and 25 shown in FIGS. 4 and 5 can be compared to the SEM image of Experimental Example 8 shown in FIG. 2B. The SEM images of Experimental Example 32 disclosed in FIGS. 9A and 9B can be compared to the SEM images of Experimental Example 34 disclosed in FIGS. 9C and 9D.

According to the SEM images of Experimental Example 28 disclosed in FIG. 7, the lithium metal complex oxide particles of the positive electrode active material obtained in Experimental Example 28 can be confirmed to have a hollow structure including a hollow part and an outer shell arranged so as to enclose the hollow part.

According to the SEM image of Experimental Example 30 disclosed in FIG. 8, the lithium metal complex oxide particles contained in the positive electrode active material obtained in Experimental Example 30 can be confirmed to have a porous structure in which voids are dispersed over the entirety of the particles.

Although the positive electrode active material for the lithium-ion secondary battery, and the production method of the positive electrode active material for the lithium-ion secondary battery have been described by way of the embodiments, working examples, and the like, the present invention is not limited to the above embodiments and working examples. Various modifications and changes are possible within the scope of the gist of the invention described in the claims recited.

The present application claims priority to Japanese Patent Application No. 2022-061916, filed with the Japan Patent Office on April 1, 2022, and the entire contents of Japanese Patent Application No. 2022-061916 are incorporated in the present international application by reference.

## Claims

1. A positive electrode active material for a lithium-ion secondary battery, the positive electrode active material comprising:
lithium metal complex oxide particles; and
one or more additive particles selected from among aluminum oxide particles, titanium oxide particles, magnesium oxide particles, silicon oxide particles, and zirconium oxide particles, wherein
a specific surface area of the positive electrode active material is 0.25 m²/g or more and 4.0 m²/g or less.

2. The positive electrode active material for the lithium-ion secondary battery according to claim 1, wherein
an average particle diameter of the additive particles is 300 nm or less.

3. The positive electrode active material for the lithium-ion secondary battery according to claim 1 or 2, wherein
a percentage of the additive particles relative to the lithium metal complex oxide particles is 0.025% by mass or more and 3.0% by mass or less.

4. A production method of a positive electrode active material for a lithium-ion secondary battery, the production method comprises:
a mixing step of mixing lithium metal complex oxide particles, and one or more additive particles selected from among aluminum oxide particles, titanium oxide particles, magnesium oxide particles, silicon oxide particles, and zirconium oxide particles, wherein
in the mixing step, the mixing is performed such that a specific surface area of a positive electrode active material obtained after the mixing step is 0.25 m²/g or more and 4.0 m²/g or less.
